# EUROPEAN PATENT SPECIFICATION

(11) **EP 2 327 565 B1**
(45) Date of publication and mention of the grant of the patent: **17.07.2013**
(21) Application number: 10193182.2
(22) Date of filing: 30.11.2010
(51) Int. Cl.: B60B 3/04

(54) **An improved semi full face steel wheel**
Verbessertes Halbvollscheiben-Stahlrad
Roue d'acier améliorée à face demi-pleine

(30) Priority: 30.11.2009 IN DE24572009
(43) Date of publication of application: 01.06.2011
(73) Proprietor: M/s Steel Strips Wheel Ltd, Madya Marg CHD (IN)
(72) Inventor: Kumar, S. Krishna, Chandigarh (IN)
(74) Representative: Hyden, Martin Douglas

(56) References cited:
- DE-A1- 3 503 882
- JP-A- 2 099 402
- US-A- 5 417 476
- US-A1- 2006 043 785

## Description

### FIELD OF THE INVENTION

This invention relates in general to wheels and specifically, the present invention is directed at improving the durability of disc wheels.

### BACKGROUND OF THE INVENTION

Steel wheel used in the modem day vehicles comprises a formed steel disc or wheel center with a flange part, which is assembled in a rolled steel rim and joined by means of fillet welding. When the disc or wheel center is mounted below the bead seat area of the rim, the wheel is known as "Semi-Full Faced Wheel". This type of wheel can be used where the brake clearance is too small to adapt to a well attached steel wheels. This can also compete with the alloy wheels in aesthetics with comparatively low cost.

While developing the "Semi-Full Faced Wheel" it was found that the wheel could not fulfill the required fatigue endurance life. In order to counter this problem the disc thickness was increased and the profile of the disc was smoothened. However, the increase in the thickness of the disc resulted in cracking at weld area during the endurance test. US 2006/0043785 that forms the closest prior art documents describes a vehicle wheel including a wheel disc with a disc flange portion extending toward an outer peripheral edge of the vehicle wheel. US 5 417 476 describes a disk wheel for an automobile comprising a rim and a disk which are drop portion-engaged with each other, has a construction such that it includes a plurality of humps provided on an outer peripheral surface of the disk facing the rim, the humps being formed at positions away from welded portions between the disk and the rim in such a manner as to extend with intervals in the circumferential direction, so that the outer peripheral surfaces of the hump are press-fitted against the rim. JP 2 099402 describes a automotive wheel to strengthen the bond between a rim and a disk of an automotive wheel to increase durability by assembling the rim and the disk in combination with thermosetting adhesive and welding. DE 35 03 882 describes a vehicle wheel consisting of rim and wheel disc or adapter ring connected by an adhesive.

Thus there exists a need to design a wheel having improved endurance and durability which is fulfilled by the present invention.

### SUMMARY OF THE INVENTION

This invention relates to an improved construction of a Semi-Full Faced Wheel having high durability, comprising a rim securely attached to upper edge of a disc. The disc holds a flange portion extending to its distal end. The firm disc-rim conjoint is aided by a weld at the distal circumference of the flange portion of the disc. One aspect of the present invention relates to an improved semi-full faced wheel having high durability, wherein said wheel comprises: a rim (102), wherein said rim (102) comprises a bead seat area (103); a disc (101), wherein said disc (101) comprises a flange portion (105), and said flange portion (105) of said disc (101) is joined with said bead seat area (103) of said rim (102) by welding; and further characterized in that at least one open groove (104) having width (108) between 0.25 to 1.2 times of a fitment width (107) and depth (111) between 0.25 to 0.7 times of a neck depth (110) is provided on the periphery of said flange portion (105) of said disc (101) at a distance between one to two times of the fitment width (107); wherein said fitment width (107) is the distance between bottom edge (109) of said flange portion (105) of said disc (101) and starting point of said groove (104) and said neck depth (110) is the remainder region of said disc flange (105) after said groove is formed. Another aspect of the present invention relates to an improved semi-full faced wheel having high durability, wherein said wheel comprises: a rim(102), wherein said rim (102) comprises a bead seat area (103); a disc (101), wherein said disc (101) comprises a flange portion (105), and said flange portion (105) of said disc (101) is joined with said bead seat area (103) of said rim (102) by welding; and further characterized in that at least two open grooves (104) provided on the periphery of said flange portion (105)of said disc (101) at a predetermined distance from bottom edge (109) of said flange portion (105) of said disc (101), wherein first groove (104) and second groove (104) are spaced from each other.

It is an object of the present invention to improve the endurance and durability by providing one or more grooves on the disc surface at a predetermined distance from the brim of the flange portion of the disc.

The groove width and groove depth are pre-determined, which allows the groove(s) to bear the residual stress, which otherwise would cause lower durability of the wheel and lead the weld to fracture.

It is another object of the present invention to save rim & disc material while improving endurance and durability of the wheel by providing one or more grooves on the disc surface.

It is another object of the present invention to ease the formability of the disc as the groove on the disc surface provides improved performance of the wheel even at lower disc thickness.

It is still another object of the present invention to lower the cost of manufacturing the wheel by minimizing the amount of rim & disc material while improving the efficiency of the wheel.

These and other objectives associated with the features of the present invention can be best understood from the following specifications, description and drawings.

### BRIEF DESCRIPTION OF DRAWINGS

FIG. 1 is a plan view of a disc wheel consisting of a disc and a rim;
FIG. 2 is a lateral view of a disc wheel and rim arrangement;
FIG. 3 is an exploded view of the region encircled in FIG. 2;
FIG. 4 shows details of the disc embodying the groove(s);
FIG. 5 illustrates the groove(s) on the lower periphery of flange portion of the disc; and
FIG. 6 illustrates the groove(s) at the upper as well as the lower periphery of the flange portion of the disc.

### DETAILED DESCRIPTION OF THE DRAWINGS

For the purpose of improving an understanding of the present invention, references are made in the text hereof to automotive disc wheels. It is nevertheless understood that no limitations to the scope of the disclosure are thereby intended.

Accordingly, it is an object of the present invention to provide an improved automobile wheel construction, which overcomes the aforementioned problems.

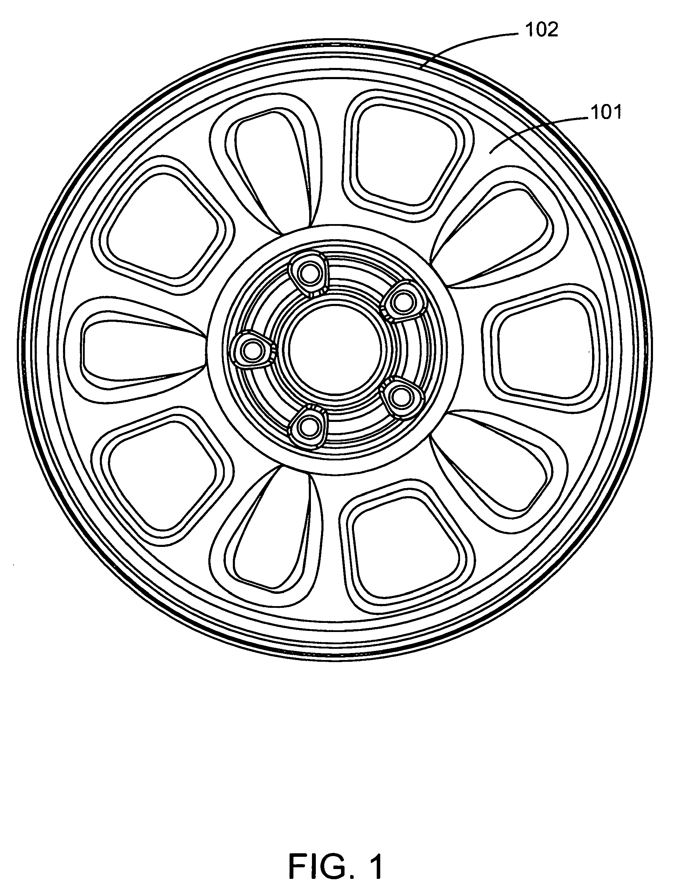

FIG.1 illustrates a plan view of a disc wheel consisting of a disc 101 and rim 102, and the disc 101 is attached to the rim 102.

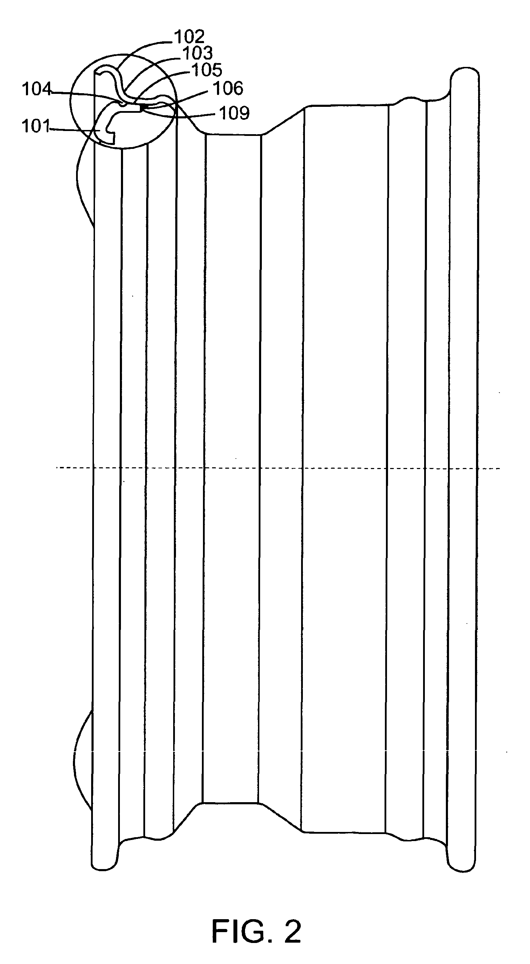

In one embodiment of the invention, the disc 101 is attached below the bead seat area 103 of the rim 102 as shown in FIG. 2. The bottom face 109 of the disc flange 105 is welded to the bottom portion of the bead seat 103. This type of "Semi Full Faced Wheel" arrangement assists an increase in the room for bigger brake calipers. However, the disc 101 may be attached to the rim 102 at various other points without altering the scope of the invention.

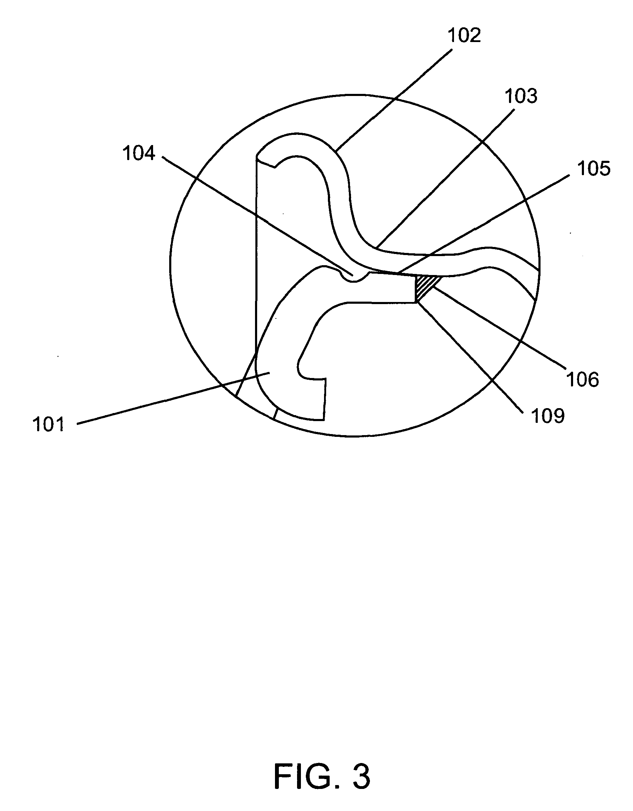

FIG. 3, which is the exploded view of the circled portion in FIG. 2 and illustrates a groove(s) 104 provided along the periphery of the disc flange 105 adjoining the fillet weld area 106 which joins the disc 101 and the rim 102.

In an embodiment, the groove(s) 104 is provided throughout the periphery of the disc 101. However, the groove(s) 104 can be provided at specific points on the periphery or in the region internal to the periphery of the disc 101. The groove(s) 104 shares the residual stress on the adjoining area leading to improved performance in rotary bending durability test, thereby, preventing fracture at the weld 106. The groove(s) 104 eliminates the need of increasing the thickness of the disc 101 & rim 102. Further, by avoiding the increase in the thickness of the disc 101, the formability of the disc 101 is increased and the tooling and material costs are reduced.

In an exemplary embodiment of the present invention, the shape of the groove(s) is semi-circular. However, the groove(s) can be, but not limited to, semi-circular, v-shaped, u-shaped, rectangular shaped or any suitable combination thereof or any such shape possible by machining.

In yet another embodiment of the present invention, plurality of closely spaced groove(s) 104 are provided throughout the periphery of the disc 101.

In an alternate embodiment of the present invention, the groove(s) 104 are a series of, semi-circular, v-shaped, u-shaped, rectangular shaped or any suitable combination thereof or any such shape possible by machining, aligned in orientation of semi-circular, v-shaped, u-shaped, rectangular shaped or any suitable combination thereof or any such shape possible by machining.

In another embodiment of the present invention, the groove(s) 104 possesses a radius/depth of the range of 0.50mm to 4.5mm. However, the groove(s) can have various depth values without altering the scope of the invention.

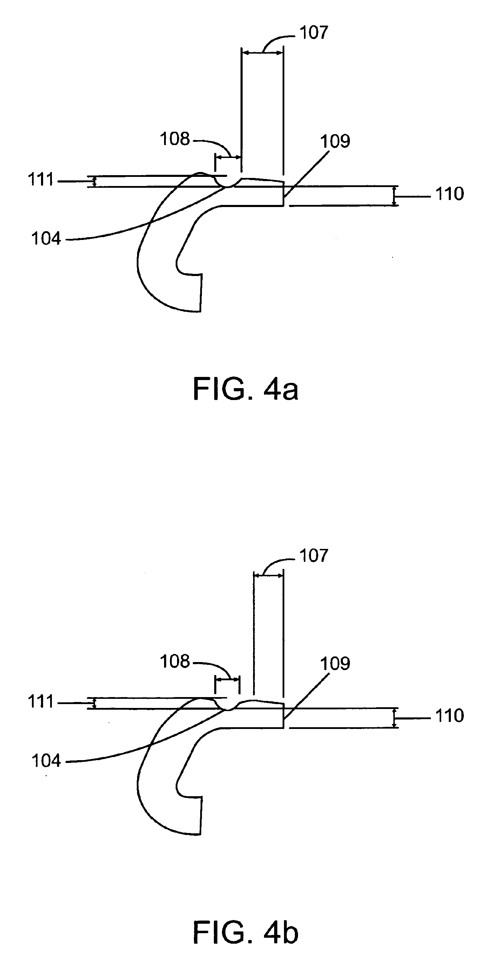

In yet another embodiment of the present invention as shown in the FIG. 4, the groove(s) width 108 is equivalent to 0.25 to 1.2 times a fitment width 107. The fitment width 107 is the distance between the disc flange bottom face 109 and the start point of the groove(s) 104, on the same side where the bead seat area 103 of the rim 102 and the bottom face 109 of the disc flange 105 are parallel to each other as illustrated in FIG.4a. However in general the fitment width 107 is the length of weld area between the between the bead seat area 103 of the rim 102 and the bottom face 109 of the disc flange 105 as shown in FIG.4b. Preferably, the groove(s) width 108 is within the range of 0.25 to 0.85 times the fitment width 107. However, the groove(s) 104 can have a range of width values without altering the scope of the invention.

In an alternate embodiment of the invention, the pre-determined width of said groove(s) is reduced and pre-determined depth of said groove(s) is increased, comparatively, thereby increasing the mechanical strength of said weld of said disc-rim conjoint.

In an exemplary embodiment of the invention, the groove(s) depth 111 is equivalent to 0.25 to 1 times the 'Neck Depth' or 'Land' 110. The 'Neck Depth' or 'Land' 110 is the remainder region of the disc flange 109 after the groove(s) 104 is formed. Preferably, the groove(s) depth 111 value is between 0.5 to 0.7 times the neck depth or land 110. However, the groove(s) 104 can have a range of depth values without altering the scope of the invention.

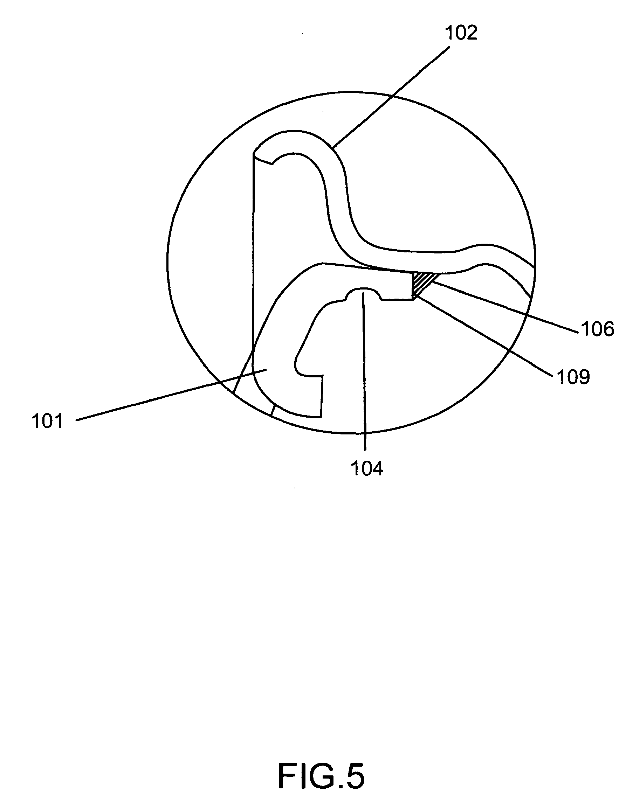

In an alternate embodiment of the present invention, as shown in FIG. 5, the groove(s) 104 is positioned on the lower periphery of the disc flange 105.

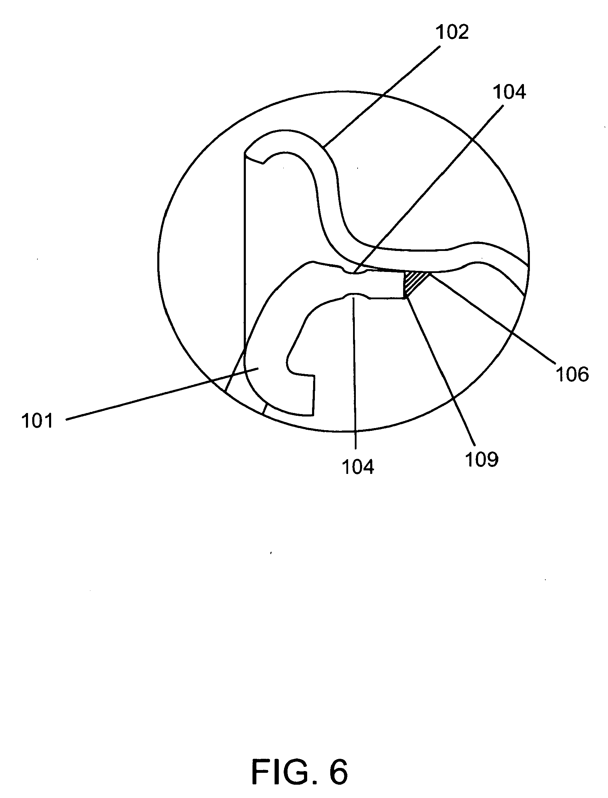

In yet another embodiment of the present invention, as shown in FIG 6, the groove(s) 104 can be entrenched on both the upper and the lower periphery of the disc flange 105.

In a further embodiment of the present invention, the position of the groove(s) 104 can be fixed from the disc flange bottom face 109 at a value that is 1 to 2 times the fitment width 107 of the disc 101 as illustrated in FIG.4b. However, it is to be understood that the groove(s) 104 can be provided at various positions without altering the scope of the invention.

## Claims

1. An improved semi-full faced wheel having high durability, wherein said wheel comprises:
a. a rim (102), wherein said rim (102) comprises a bead seat area (103);
b. a disc (101), wherein said disc (101) comprises a flange portion (105), and said flange portion (105) of said disc (101) is joined with said bead seat area (103) of said rim (102) by welding; and
further **characterized in that**
c. at least one open groove (104) having width (108) between 0.25 to 1.2 times of a fitment width (107) and depth (111) between 0.25 to 0.7 times of a neck depth (110) is provided on the periphery of said flange portion (105) of said disc (101)at a distance from the disc flange bottom face (109) between one to two times of the fitment width (107); wherein said fitment width (107) is the distance between bottom edge (109) of said flange portion (105) of said disc (101) and starting point of said groove (104) and said neck depth (110) is the remainder region of said disc flange (105) after said groove is formed.

2. An improved semi-full faced wheel according to claim 1, wherein said bead seat area (103) of said rim (102) and said flange portion (105) of said disc (101) are parallel to each other.

3. An improved semi-full faced wheel according to claim 1, wherein said groove (104) is v-shaped, u-shaped, semi-circular or rectangular shaped or any suitable combination thereof.

4. An improved semi-full faced wheel according to claim 1, wherein said groove (104) has a depth of the range of 0.50mm to 4.50mm.

5. An improved semi-full faced wheel according to claim 1, wherein said groove (104) has a width of the range of 1.50mm to 6mm.

6. An improved semi-full faced wheel according to claim 1, wherein said predetermined distance of the position of said groove (104) is between 3.0mm to 15mm from bottom edge (109)of said flange portion (105) of said disc (101).

7. An improved semi-full faced wheel according to claim 1, wherein said groove (104) is positioned on the lower edge of periphery of said flange portion (105) of said disc (101).

8. An improved semi-full faced wheel according to claim 1, wherein said groove (104) is positioned on the upper edge of periphery of said flange portion (105) of said disc (101).

9. An improved semi-full faced wheel having high durability, wherein said wheel comprises:
a. a rim(102), wherein said rim (102) comprises a bead seat area (103);
b. a disc (101), wherein said disc (101) comprises a flange portion (105), and said flange portion (105) of said disc (101) is joined with said bead seat area (103) of said rim (102) by welding; and
further **characterized in that**
c. at least two open grooves (104) provided on the periphery of said flange portion (105)of said disc (101) at a predetermined distance from bottom edge (109) of said flange portion (105) of said disc (101), wherein first groove (104) and second groove (104) are spaced from each other.

10. An improved semi-full faced wheel according to claim 9, wherein said bead seat area (103) of said rim (102) and said flange portion (105) of said disc are parallel to each other.

11. An improved semi-full faced wheel according to claim 9, wherein said grooves (104) are v-shaped, u-shaped, semi-circular or rectangular shaped or combination thereof.

12. An improved semi-full faced wheel according to claim 9, wherein width (108) of said first and second grooves (104) is 0.25 to 0.85 times a fitment width (107) wherein said fitment width (107) is the distance between bottom edge (109) of said flange portion (105) of said disc (101) and starting point of said first groove (104).

13. An improved semi-full faced wheel according to claim 9, wherein depth (111) of said first and second grooves (104) is 0.25 to 0.7 times 'neck depth' (110) of said disc (101), wherein said neck depth (110) is the remaining depth of said flange portion (105) of said disc (101) after said groove (104) is formed.

14. An improved semi-full faced wheel according to claim 9, wherein said first and second grooves (104) are positioned on the lower edge of periphery of said flange portion (105) of said disc (101).

15. An improved semi-full faced wheel according to claim 9, wherein said first groove (104) is positioned on the upper edge of periphery of said flange portion (105) of said disc (101) and said second groove (104) is positioned on the lower edge of periphery of said flange portion (105) of said disc (101).

16. An improved semi-full faced wheel according to claim 9, wherein said grooves (104) are positioned within a predetermined distance of one to two times the fitment width (107) from bottom edge (109) of said flange portion (105) of said disc (101).

17. An improved semi-full faced wheel according to claim 9, wherein said grooves (104) have a depth of the range of 0.50mm to 4.50mm.

18. An improved semi-full faced wheel according to claim 9, wherein said grooves (104) have a width of the range of 1.50mm to 6mm.

## Patentansprüche

1. Verbessertes halbvoll verkleidetes Rad, das eine hohe Haltbarkeit hat, wobei das Rad Folgendes umfasst:
a. eine Felge (102), wobei die Felge (102) eine Wulstsitzfläche (103) umfasst,
b. eine Scheibe (101), wobei die Scheibe (101) einen Flanschabschnitt (105) umfasst und der Flanschabschnitt (105) der Scheibe (101) durch Schweißen mit der Wulstsitzfläche (103) der Felge (102) verbunden ist, und
ferner **dadurch gekennzeichnet, dass**
c. wenigstens eine offene Rille (104), die eine Breite (108) zwischen dem 0,25- und dem 1,2-fachen einer Anpassungsbreite (107) und eine Tiefe (111) zwischen dem 0,25- und dem 0,7-fachen einer Halstiefe (110) hat, an dem Umfang des Flanschabschnitts (105) der Scheibe (101) bei einer Entfernung von der Scheibenflansch-Bodenfläche (109) zwischen der einfachen und der doppelten Anpassungsbreite (107) bereitgestellt wird, wobei die Anpassungsbreite (107) die Entfernung zwischen der unteren Kante (109) des Flanschabschnitts (105) der Scheibe (101) und dem Startpunkt der Rille (104) ist und die Halstiefe (110) der verbleibende Bereich des Scheibenflanschs (105), nachdem die Rille geformt ist, ist.

2. Verbessertes halbvoll verkleidetes Rad nach Anspruch 1, wobei die Wulstsitzfläche (103) der Felge (102) und der Flanschabschnitt (105) der Scheibe (101) parallel zueinander sind.

3. Verbessertes halbvoll verkleidetes Rad nach Anspruch 1, wobei die Rille (104) v-förmig, u-förmig, halbkreisförmig oder rechteckig geformt oder eine beliebige geeignete Kombination derselben ist.

4. Verbessertes halbvoll verkleidetes Rad nach Anspruch 1, wobei die Rille (104) eine Tiefe in dem Bereich von 0,50 mm bis 4,50 mm hat.

5. Verbessertes halbvoll verkleidetes Rad nach Anspruch 1, wobei die Rille (104) eine Breite in dem Bereich von 1,50 mm bis 6 mm hat.

6. Verbessertes halbvoll verkleidetes Rad nach Anspruch 1, wobei die vorbestimmte Entfernung der Position der Rille (104) zwischen 3,0 mm bis 15 mm von der unteren Kante (109) des Flanschabschnitts (105) der Scheibe (101) beträgt.

7. Verbessertes halbvoll verkleidetes Rad nach Anspruch 1, wobei die Rille (104) an der unteren Kante des Umfangs des Flanschabschnitts (105) der Scheibe (101) angeordnet ist.

8. Verbessertes halbvoll verkleidetes Rad nach Anspruch 1, wobei die Rille (104) an der oberen Kante des Umfangs des Flanschabschnitts (105) der Scheibe (101) angeordnet ist.

9. Verbessertes halbvoll verkleidetes Rad, das eine hohe Haltbarkeit hat, wobei das Rad Folgendes umfasst:
a. eine Felge (102), wobei die Felge (102) eine Wulstsitzfläche (103) umfasst,
b. eine Scheibe (101), wobei die Scheibe (101) einen Flanschabschnitt (105) umfasst und der Flanschabschnitt (105) der Scheibe (101) durch Schweißen mit der Wulstsitzfläche (103) der Felge (102) verbunden ist, und
ferner **dadurch gekennzeichnet, dass**
c. wenigstens zwei offene Rillen (104) an dem Umfang des Flanschabschnitts (105) der Scheibe (101) bei einer vorbestimmten Entfernung von der Kante (109) des Flanschabschnitts (105) der Scheibe (101) bereitgestellt werden, wobei die erste Rille (104) und die zweite Rille (104) mit Abstand voneinander angeordnet sind.

10. Verbessertes halbvoll verkleidetes Rad nach Anspruch 9, wobei die Wulstsitzfläche (103) der Felge (102) und der Flanschabschnitt (105) der Scheibe parallel zueinander sind.

11. Verbessertes halbvoll verkleidetes Rad nach Anspruch 9, wobei die Rillen (104) v-förmig, u-förmig, halbkreisförmig oder rechteckig geformt oder eine Kombination derselben sind.

12. Verbessertes halbvoll verkleidetes Rad nach Anspruch 9, wobei die Breite (108) der ersten und der zweiten Rille (104) das 0,25- bis 0,85-fache einer Anpassungsbreite (107) beträgt, wobei die Anpassungsbreite (107) die Entfernung zwischen der unteren Kante (109) des Flanschabschnitts (105) der Scheibe (101) und dem Startpunkt der ersten Rille (104) ist.

13. Verbessertes halbvoll verkleidetes Rad nach Anspruch 9, wobei die Tiefe (111) der ersten und der zweiten Rille (104) das 0,25- bis 0,7-fache einer 'Halstiefe' (110) der Scheibe (101) beträgt, wobei die Halstiefe (110) die verbleibende Tiefe des Flanschabschnitts (105) der Scheibe (101), nachdem die Rille (104) geformt ist, ist.

14. Verbessertes halbvoll verkleidetes Rad nach Anspruch 9, wobei die erste und die zweite Rille (104) an der unteren Kante des Umfangs des Flanschabschnitts (105) der Scheibe (101) angeordnet sind.

15. Verbessertes halbvoll verkleidetes Rad nach Anspruch 9, wobei die erste Rille (104) an der oberen Kante des Umfangs des Flanschabschnitts (105) der Scheibe (101) angeordnet ist und die zweite Rille (104) an der unteren Kante des Umfangs des Flanschabschnitts (105) der Scheibe (101) angeordnet ist.

16. Verbessertes halbvoll verkleidetes Rad nach Anspruch 9, wobei die Rillen (104) innerhalb einer vorbestimmten Entfernung der einfachen oder doppelten Anpassungsbreite (107) von der unteren Kante (109) des Flanschabschnitts (105) der Scheibe (101) angeordnet sind.

17. Verbessertes halbvoll verkleidetes Rad nach Anspruch 9, wobei die Rillen (104) eine Tiefe in dem Bereich von 0,50 mm bis 4,50 mm haben.

18. Verbessertes halbvoll verkleidetes Rad nach Anspruch 9, wobei die Rillen (104) eine Breite in dem Bereich von 1,50 mm bis 6 mm haben.

## Revendications

1. Roue améliorée à face semi-pleine ayant une durabilité élevée, dans laquelle ladite roue comprend :
a. une jante (102), dans laquelle ladite jante (102) comprend une zone siège de talon (103) ;
b. un disque (101), dans laquelle ledit disque (101) comprend une portion de bride (105) et ladite portion de bride (105) dudit disque (101) est jointe à ladite zone siège de talon (103) de ladite jante (102) par soudage ; et
**caractérisée en outre en ce que** :
au moins une rainure ouverte (104) ayant une largeur (108) entre 0,25 et 1,2 fois une largeur d'ajustement (107) et une profondeur (111) entre 0,25 et 0,7 fois une profondeur de collet (110) est ménagée sur la périphérie de ladite portion de bride (105) dudit disque (101) à une distance de la face inférieure (109) de la bride de disque comprise entre une et deux fois la largeur d'ajustement (107) ; dans laquelle ladite largeur d'ajustement (107) est la distance entre le bord inférieur (109) de ladite portion de bride (105) dudit disque (101) et le point de départ de ladite rainure (104) et ladite profondeur de collet (110) est la région restante de ladite bride de disque (105) une fois que ladite rainure est formée.

2. Roue améliorée à face semi-pleine selon la revendication 1, dans laquelle ladite zone siège de talon (103) de ladite jante (102) et ladite portion de bride (105) dudit disque (101) sont parallèles l'une à l'autre.

3. Roue améliorée à face semi-pleine selon la revendication 1, dans laquelle ladite rainure (104) est en forme de V, en forme de U, en forme semi-circulaire ou rectangulaire ou une quelconque combinaison appropriée de celles-ci.

4. Roue améliorée à face semi-pleine selon la revendication 1, dans laquelle ladite rainure (104) a une profondeur dans la plage de 0,50 mm à 4,50 mm.

5. Roue améliorée à face semi-pleine selon la revendication 1, dans laquelle ladite rainure (104) a une largeur dans la plage de 1,50 mm à 6 mm.

6. Roue améliorée à face semi-pleine selon la revendication 1, dans laquelle ladite distance prédéterminée de la position de ladite rainure (104) se situe entre 3,0 mm et 15 mm du bord inférieur (109) de ladite portion de bride (105) dudit disque (101).

7. Roue améliorée à face semi-pleine selon la revendication 1, dans laquelle ladite rainure (104) est positionnée sur le bord inférieur de la périphérie de ladite portion de bride (105) dudit disque (101).

8. Roue améliorée à face semi-pleine selon la revendication 1, dans laquelle ladite rainure (104) est positionnée sur le bord supérieur de la périphérie de ladite portion de bride (105) dudit disque (101).

9. Roue améliorée à face semi-pleine ayant une durabilité élevée, dans laquelle ladite roue comprend :
a. une jante (102), dans laquelle ladite jante (102) comprend une zone siège de talon (103) ;
b. un disque (101), dans laquelle ledit disque (101) comprend une portion de bride (105) et ladite portion de bride (105) dudit disque (101) est jointe à ladite zone siège de talon (103) de ladite jante (102) par soudage ; et
**caractérisée en outre en ce que** :
c. au moins deux rainures ouvertes (104) sont ménagées sur la périphérie de ladite portion de bride (105) dudit disque (101) à une distance prédéterminée du bord inférieur (109) de ladite portion de bride (105) dudit disque (101), où la première rainure (104) et la seconde rainure (104) sont espacées l'une de l'autre.

10. Roue améliorée à face semi-pleine selon la revendication 9, dans laquelle ladite zone siège de talon (103) de ladite jante (102) et ladite portion de bride (105) dudit disque sont parallèles l'une à l'autre.

11. Roue améliorée à face semi-pleine selon la revendication 9, dans laquelle lesdites rainures (104) sont en forme de V, en forme de U, en forme semi-circulaire ou rectangulaire ou une de leurs combinaisons.

12. Roue améliorée à face semi-pleine selon la revendication 9, dans laquelle la largeur (108) desdites première et seconde rainures (104) est de 0,25 à 0,85 fois une largeur d'ajustement (107), dans laquelle ladite largeur d'ajustement (107) est la distance comprise entre le bord inférieur (109) de ladite portion de bride (105) dudit disque (101) et le point de départ de ladite première rainure (104).

13. Roue améliorée à face semi-pleine selon la revendication 9, dans laquelle la profondeur (111) desdites première et seconde rainures (104) est de 0,25 à 0,7 fois la « profondeur de collet » (110) dudit disque (101), dans laquelle ladite profondeur de collet (110) est la profondeur restante de ladite portion de bride (105) dudit disque (101) une fois que ladite rainure (104) est formée.

14. Roue améliorée à face semi-pleine selon la revendication 9, dans laquelle lesdites première et seconde rainures (104) sont positionnées sur le bord inférieur de la périphérie de ladite portion de bride (105) dudit disque (101).

15. Roue améliorée à face semi-pleine selon la revendication 9, dans laquelle ladite première rainure (104) est positionnée sur le bord supérieur de la périphérie de ladite portion de bride (105) dudit disque (101) et ladite seconde rainure (104) est positionnée sur le bord inférieur de la périphérie de ladite portion de bride (105) dudit disque (101).

16. Roue améliorée à face semi-pleine selon la revendication 9, dans laquelle lesdites rainures (104) sont positionnées à une distance prédéterminée d'une ou deux fois la largeur d'ajustement (107) depuis le bord inférieur (109) de ladite portion de bride (105) dudit disque (101).

17. Roue améliorée à face semi-pleine selon la revendication 9, dans laquelle lesdites rainures (104) ont une profondeur dans la plage de 0,50 mm à 4,50 mm.

18. Roue améliorée à face semi-pleine selon la revendication 9, dans laquelle lesdites rainures (104) ont une largeur dans la plage de 1,50 mm à 6 mm.
